# EUROPEAN PATENT APPLICATION

(11) **EP 1 248 012 A2**
(43) Date of publication of application: **09.10.2002**
(21) Application number: 02076021.1
(22) Date of filing: 15.03.2002
(51) Int. Cl.: F16F 9/36

(54) **Hydraulic damper for a vehicle suspension system**

(30) Priority: 05.04.2001 GB 0108577
(71) Applicant: Delphi Technologies, Inc., Troy, MI 48007 (US)
(72) Inventor: Candela, Miguel, 11130 Cadiz (ES); Mulero, José, Puerto Real, Cadiz (ES); Flores, Juan, Puerto Real, Cadiz (ES)
(74) Representative: Denton, Michael John

(57) **Abstract**

A hydraulic damper (10) for a suspension system comprising an inner housing (12) substantially closed at one end (14) and containing fluid; an outer housing (15) closed at one end (19) and coaxial with the inner housing; a piston assembly (16) slidably mounted in the inner housing and making a sealing fit therewith, the piston assembly separating a compression chamber (22) and a rebound chamber (20) within the inner housing; a piston rod (26) attached to the piston assembly, having a longitudinal axis (L), and extending through the rebound chamber and out of the other end (28) of the inner housing; a compression stroke valve mounted on the piston assembly for controlling flow of fluid during a compression stroke from the compression chamber to the rebound chamber; a rebound stroke valve mounted on the piston assembly for controlling flow of fluid during a rebound stroke from the rebound chamber to the compression chamber; a compensation chamber (23) partially filled with fluid between the inner housing and the outer housing; a piston rod guide (30) closing the other end of the inner housing and the other end (21) of the outer housing, the piston rod guide having a bore (32) therethrough through which the piston rod extends, and a fluid passage (42,56,44,46) between the rebound chamber and the compensation chamber at least in part defined by the bore; and a seal ring (50) positioned in the bore in contact with the piston rod, the seal ring being movable relative to the piston rod guide to substantially close the fluid passage during a compression stroke or a rebound stroke; wherein the seal ring is substantially annular and resilient, and has a radially extending slot (54) formed therein. Reduces risk of seal ring sticking to the piston rod during a compression stroke.

## Description

### Technical Field

The present invention relates to a hydraulic damper for the suspension system of a motor vehicle.

### Background of the Invention

Known hydraulic dampers comprise an inner tube; an outer tube; a piston sealably slidably mounted in the inner tube and attached to a piston rod, the piston separating a compression chamber from a rebound chamber within the inner tube; a compression stroke valve mounted on the piston; a rebound stroke valve mounted on the piston; a compensation chamber between the inner tube and the outer tube; and a compensation valve closing the inner tube between the compensation chamber and the compression chamber. The compression stroke valve acts as a one way valve to allow flow of fluid from the compression chamber to the rebound chamber through one or more compression flow passages in the piston during the compression stroke of the suspension strut. The rebound stroke valve acts as a one way valve which allows flow of fluid from the rebound chamber to the compression chamber through one or more rebound flow passages in the piston during the rebound stroke of the suspension strut. A piston rod guide closes the inner tube and the outer tube. The piston rod extends through the piston rod guide and makes a sealing sliding fit therewith. A fluid passage is formed in the piston rod guide to allow fluid flow between the rebound chamber and the compensation chamber. A seal ring mounted on the piston rod guide and engaging the piston rod is axially movable relative to the piston rod guide to substantially close the fluid passage during a rebound stroke or a compression stroke. The seal ring is annular and closed. In certain conditions, the seal ring may frictionally grip, and move with, the piston rod to leave the fluid passage fully open during part of a compression stroke, followed by the seal ring suddenly moving to substantially close the fluid passage. This has the effect of creating a step in the damping load graphics and a knocking noise. An additional problem is that the contact between the seal ring and the piston rod may be lost (for example, during operation at high temperature) which significantly reduces the effect of the seal ring.

### Summary of the Invention

It is an object of the present invention to overcome the above mentioned problems.

A hydraulic damper in accordance with the present invention for a suspension system comprises an elongate tubular inner housing substantially closed at one end and containing fluid; an elongate tubular outer housing closed at one end and coaxial with the inner housing; a piston assembly slidably mounted in the inner housing and making a sealing fit therewith, the piston assembly separating a compression chamber and a rebound chamber within the inner housing; a piston rod attached to the piston assembly, having a longitudinal axis, and extending through the rebound chamber and out of the other end of the inner housing; a compression stroke valve mounted on the piston assembly for controlling flow of fluid during a compression stroke from the compression chamber to the rebound chamber; a rebound stroke valve mounted on the piston assembly for controlling flow of fluid during a rebound stroke from the rebound chamber to the compression chamber; a compensation chamber partially filled with fluid between the inner housing and the outer housing; a piston rod guide closing the other end of the inner housing and the other end of the outer housing, the piston rod guide having a bore therethrough through which the piston rod extends, and a fluid passage between the rebound chamber and the compensation chamber at least in part defined by the bore; and a seal ring positioned in the bore in contact with the piston rod, the seal ring being movable relative to the piston rod guide to substantially close the fluid passage during a compression stroke or a rebound stroke; wherein the seal ring is substantially annular and resilient, and has a radially extending slot formed therein.

The present invention provides a hydraulic damper in which the frictional force between the piston rod and the seal ring is reduced to substantially zero or is negligible, thereby allowing the seal ring to substantially freely move relative to the piston rod guide. The damping load characteristics of the hydraulic damper therefore maintain uniformity. Further, the contact (seal) between the piston rod and the seal ring remains even at higher operating temperatures.

### Brief Description of the Drawings

The present invention will now be described, by way of example, with reference to the accompanying drawings, in which:
Figure 1 is a cross-sectional view of a hydraulic damper in accordance with the present invention;
Figure 2 is an enlarged cross-sectional view of the piston rod, piston rod guide, and seal ring of the damper of Figure 1;
Figure 3 is a cross-sectional view on the line III-III of Figure 2;
Figure 4 is an enlarged cross-section view of the area IV of Figure 3; and
Figure 5 is an enlarged cross-sectional view of the area V of Figure 2.

### Description of the Preferred Embodiment

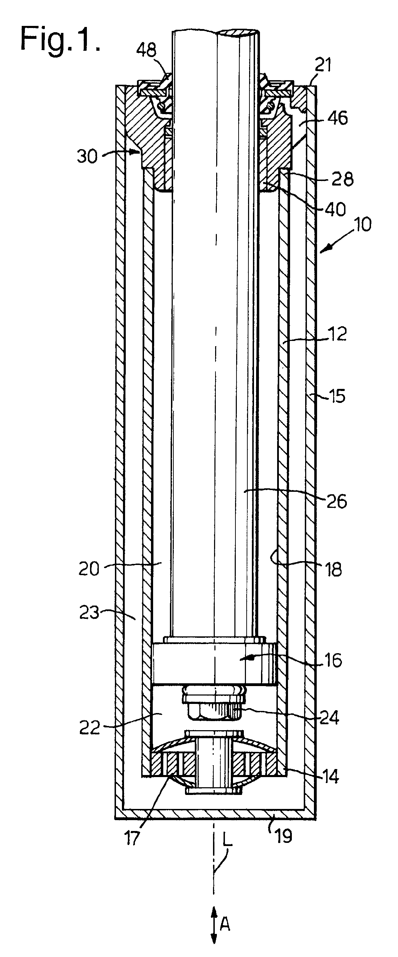

Referring to Figure 1, the hydraulic damper 10 in accordance with the present invention comprises an inner elongate tubular housing 12, and an outer elongate tubular housing 15 which is substantially coaxial with the inner housing on an axis L (commonly referred to as a twin-tube damper). The inner housing 12 is substantially closed at one end 14 by a compensation valve 17. A piston assembly 16 makes a sealing sliding fit with the inner surface 18 of the inner housing 12. The piston assembly 16 defines and separates a rebound chamber 20 and a compression chamber 22 within the inner housing 12. The piston assembly 16 is attached to one end 24 of a piston rod 26 which extends through the rebound chamber 20 and out of the other end 28 of the inner housing 12. The end 19 of the outer housing 15 adjacent the compensation valve 17 is closed. A piston rod guide 30 is secured in the other end 28 of the inner housing 12 to close the rebound chamber 20. The piston rod guide 30 also closes the other end 21 of the outer housing 15. The piston rod 26 makes a sealing sliding fit with the piston rod guide 30. The area between the inner housing 12 and the outer housing 15 defines a compensation chamber 23. The piston rod 26, the outer housing 15 and the inner housing 12 extend in an axial direction A and are substantially coaxial on axis L. The piston assembly 16 and piston rod 26 can move relative to the inner housing 12 in the axial direction A. Hydraulic fluid substantially fills the rebound chamber 20 and the compression chamber 22 to damp reciprocating movement, in the axial direction A, of the piston assembly 16 and the piston rod 26 relative to the inner housing 12. The compensation chamber 23 is partly filled with hydraulic fluid and acts as a reservoir for the fluid in the rebound chamber 20 and the compression chamber 22. The hydraulic damper 10 is mountable in a motor vehicle (not shown) in any standard manner and forms part of the vehicle's suspension system. The compensation valve 17 and the piston assembly 16 may be any suitable conventional design known to those skilled in the art, and will not be described in greater detail.

A compression stroke valve and a rebound stroke valve (not shown) on the piston assembly 16 allow hydraulic fluid flow between the rebound chamber 20 and the compression chamber 22. As the piston assembly 16 moves towards the closed end 14 of the inner housing 12 (a compression stroke), the length of the damper 10 is being compressed and fluid flows past the compression stroke valve from the compression chamber 22 to the rebound chamber 20. As the piston assembly 16 moves away from the closed end 14 of the inner housing 12 (a rebound stroke), the length of the damper 10 is being extended and fluid flows past the rebound stroke valve from the rebound chamber 20 to the compression chamber 22. The compression stroke valve and the rebound stroke valve may be any suitable conventional design known to those skilled in the art, and will not be described in greater detail.

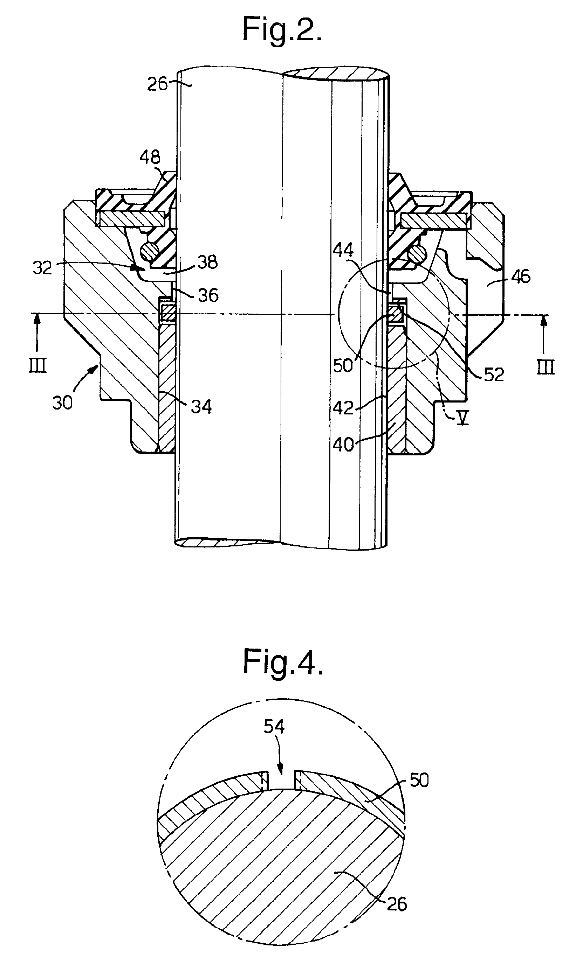

The piston rod guide 30 (as shown in Figure 2) has a through bore 32 through which the piston rod 26 extends. The bore 32 has first, second and third portions 34, 36, 38 respectively. The first portion 34 opens into the rebound chamber 20. The second portion 36 is adjacent the first portion 34 and has a smaller diameter than the first portion. The third portion 38 is adjacent the second portion 36, has a diameter which is greater than the second portion.

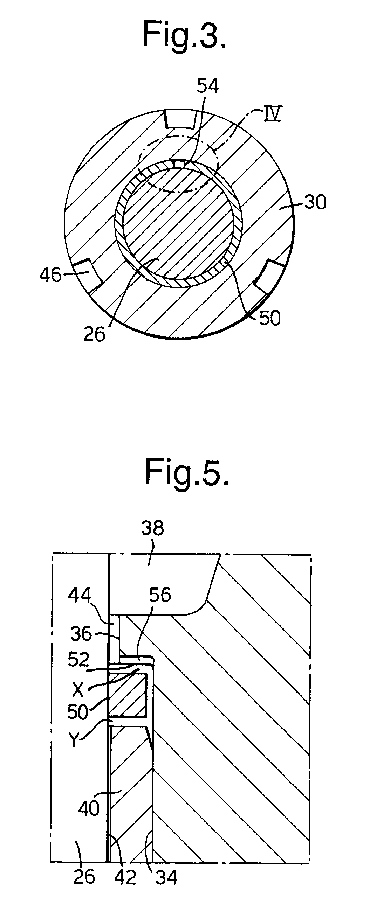

A tubular sleeve 40 is positioned in the first portion 34 of the bore 32 adjacent the rebound chamber 20. The sleeve 40 has an inner coating of Teflon or the like and acts to reduce friction between the piston rod 26 and the piston rod guide 30, and also reduce the risk of the piston rod being scratched by the piston rod guide. The inner diameter of the sleeve 40 is slightly greater than the outer diameter of the piston rod 26 to define a first passage 42 (Figure 5) therebetween which opens into the rebound chamber 20. The diameter of the second portion 36 of the bore 32 is slightly greater than the outer diameter of the piston rod 26 to define a second passage 44 therebetween between the first passage 42 and the third portion 38 of the bore. The third portion 38 of the bore 32 opens into a third passage 46 which opens into the compensation chamber 23. The shoulder 52 in the bore 32 between the first and second portions 34,36 of the bore has a radially extending groove 56 formed therein. The first, second and third passages 42, 44, 46, and the groove 56, define a fluid passage between the rebound chamber 20 and the compensation chamber 23. The third portion 38 of the bore 32 is closed to atmosphere by a lip seal 48 which makes a sealing sliding fit with the piston rod 26.

A substantially annular seal ring 50 is also positioned in the first portion 34 of the bore 32 between the sleeve 40 and the shoulder 52 in the bore between the first and second portions 34,36 of the bore (Figure 5). The seal ring 50 is dimensioned such that, in the rest position of the hydraulic damper 10, a gap X exists between the seal ring and the shoulder 52, and a gap Y exists between the seal ring and the sleeve 40. The seal ring 50 is formed of resilient material (preferably Teflon) and has a radially extending slot 54 formed therein (Figure 4). The seal ring 50 makes a sealing sliding fit on the piston rod 26 with a frictional force therebetween which is substantially zero or negligible due to the presence of the slot 54.

In the rest position of the hydraulic damper 10, fluid can flow between the rebound chamber 20 and the compensation chamber 23 by way of the fluid passage 42,56,44,46. During a compression stroke of the hydraulic damper 10, the fluid pressure in the rebound chamber 20 acts on the seal ring 50 to close the gap X. Because the frictional grip between the seal ring 50 and the piston rod 26 is substantially zero, there is a reduced risk of the seal ring sticking to the piston rod during a compression stroke and moving away from the shoulder 52. The presence of the groove 56 in the shoulder 52 allows a small flow of fluid through the fluid passage 42,56,44,46 between the rebound chamber 20 and the compensation chamber 23. The presence of the gap 54 in the seal ring 50 also allows a small flow of fluid through the fluid passage 42,56,44,46 between the rebound chamber 20 and the compensation chamber 23. During a rebound stroke of the hydraulic damper 10, the seal ring 50 also moves to close the gap X.

An additional benefit of the slot 54 in the seal ring 50 is that the seal ring will expand and contract with the piston rod 26 during temperature changes. The seal ring 50 therefore remains in contact with the piston rod 26 even at high temperatures, overcoming the risk of loss of contact.

## Claims

1. A hydraulic damper for a suspension system comprising an elongate tubular inner housing substantially closed at one end and containing fluid; an elongate tubular outer housing closed at one end and coaxial with the inner housing; a piston assembly slidably mounted in the inner housing and making a sealing fit therewith, the piston assembly separating a compression chamber and a rebound chamber within the inner housing; a piston rod attached to the piston assembly, having a longitudinal axis, and extending through the rebound chamber and out of the other end of the inner housing; a compression stroke valve mounted on the piston assembly for controlling flow of fluid during a compression stroke from the compression chamber to the rebound chamber; a rebound stroke valve mounted on the piston assembly for controlling flow of fluid during a rebound stroke from the rebound chamber to the compression chamber; a compensation chamber partially filled with fluid between the inner housing and the outer housing; a piston rod guide closing the other end of the inner housing and the other end of the outer housing, the piston rod guide having a bore therethrough through which the piston rod extends, and a fluid passage between the rebound chamber and the compensation chamber at least in part defined by the bore; and a seal ring positioned in the bore in contact with the piston rod, the seal ring being movable relative to the piston rod guide to substantially close the fluid passage during a compression stroke or a rebound stroke; wherein the seal ring is substantially annular and resilient, and has a radially extending slot formed therein.

2. A hydraulic damper as claimed in Claim 1, wherein the bore in the piston rod guide comprises first, second and third portions, the first portion opening into the rebound chamber, the second portion being positioned between the first and third portions and having a diameter smaller than the diameter of the first and third portions and greater than the diameter of the piston rod, the third portion being fluidly connected with the compensation chamber; and a shoulder in the bore between the first and second portions, wherein the seal ring is positioned in the first portion and engages the shoulder to substantially close the fluid passage during a compression stroke.

3. A hydraulic damper as claimed in Claim 2, wherein the shoulder has a radially extending groove formed therein defining a part of the fluid passage in the piston rod guide.

4. A hydraulic damper as claimed in Claim 2 or Claim 3, wherein a tubular sleeve is positioned in the first portion of the bore between the seal ring and the rebound chamber, the sleeve having an inner diameter greater than the outer diameter of the piston rod to define a part of the fluid passage; and wherein the seal ring engages the sleeve to substantially close the fluid passage during a rebound stroke.

5. A hydraulic damper as claimed in any one of Claims 1 to 4, wherein a lip seal is positioned in the bore and makes a sealing sliding fit with the piston rod.
